# EUROPÄISCHE PATENTANMELDUNG

(11) **EP 2 389 801 A2**
(43) Veröffentlichungstag der Anmeldung: **30.11.2011**
(21) Anmeldenummer: 11167332.3
(22) Anmeldetag: 24.05.2011
(51) Int. Cl.: A01K 27/00

(54) **Vorrichtung zur verdrillfreien Handhabung von zwei Leinen**

(30) Priorität: 27.05.2010 DE 102010017124
(71) Anmelder: Martin, Tobias, 57462 Olpe (DE); Patt, Frank, 58540 Meinerzhagen (DE)
(72) Erfinder: Patt, Frank, 58540, Meinerzhagen (DE); Martin, Tobias, 57462, Olpe (DE)
(74) Vertreter: Fleck, Hermann-Josef

(57) **Zusammenfassung**

Die Erfindung betrifft eine Vorrichtung zur verdrillfreien Handhabung von zwei Leinen, insbesondere Hundeleinen, mit einem Griffteil (10), an das dreh- oder schwenkbar ein Rotor (20) angekoppelt ist, wobei der Rotor die beiden Leinen aufnimmt. Eine solche Vorrichtung ist erfindungsgemäß dadurch gekennzeichnet, dass der Rotor zwei Aufnahmen (35) aufweist, in die jeweils ein Gehäuse einer die Leine aufnehmenden Abroll-Leine einsetzbar ist, und dass die Abroll-Leinen mittels Arretierstücken (24) in den Aufnahmen auswechselbar festlegbar sind. Bei einer solchen Vorrichtung können handelsübliche Abroll-Leinen austauschbar in den Aufnahmen festgelegt werden.

## Beschreibung

Die Erfindung betrifft eine Vorrichtung zur verdrillfreien Handhabung von zwei Leinen, insbesondere Hundeleinen mit einem Griffteil, an das dreh- oder schwenkbar ein Rotor angekoppelt ist, wobei der Rotor die beiden Leinen aufnimmt.

Eine solche Vorrichtung ist aus der DE 10 2007 010 294 A1 bekannt. Dabei ist das Griffteil über eine Drehlagerung an den Rotor angekoppelt. Der Rotor ist als Gehäuse ausgebildet, der zwei Leinen aufnimmt. Die Leinen sind aus den Gehäusen gegen die Vorspannung einer Wickelfeder ausziehbar. Werden die Leinen entlastet, so werden sie von der Wickelfeder wieder eingeholt. Im Griffteil ist ein Elektromotor gehalten, der mittels Bedienknöpfe wahlweise links- oder rechtsdrehend geschaltet werden kann. Wenn mit der bekannten Vorrichtung zwei Hunde geführt werden, so kommt es mitunter vor, dass sich die Wege der beiden Hunde kreuzen. Damit kreuzen sich auch die Leinen. Um diese Verdrillung aufzuheben, wird der Elektromotor aktiviert und der Rotor in der gewünschten Drehrichtung verdreht.

Eine prinzipiell ähnlich arbeitende Vorrichtung ist auch aus der WO 2006/099431 A1 bekannt.

Es ist Aufgabe der Erfindung, eine Vorrichtung zur verdrillfreien Handhabung von zwei Leinen bereit zu stellen, die sich durch einen einfachen Aufbau und eine verbesserte Handhabung auszeichnet.

Diese Aufgabe wird dadurch gelöst, dass der Rotor zwei Aufnahmen aufweist, in die jeweils ein Gehäuse einer die Leine aufnehmenden Abroll-Leine einsetzbar ist, und dass die Abroll-Leine mittels Arretierstücken in den Aufnahmen auswechselbar festlegbar sind. Damit können als Abroll-Leine handelsübliche Hundeleinen eingesetzt werden, die in einem Gehäuse eine Leine, eine Rückholfeder zum Aufwickeln der Leine, nachdem diese ausgezogen war, und üblicherweise einen Sperrmechanismus zur Blockade der Ausziehbewegung der Leine aufweist. Solche Abroll-Leinen sind in verschiedenen Ausführungen im Handel kostengünstig erhältlich. Diese Abroll-Leinen können erfindungsgemäß in je eine Aufnahme des Rotors eingesetzt werden und mittels der Arretierstücke festgelegt werden. Damit ist die Vorrichtung sofort betriebsbereit. Üblicherweise besitzen Hundeführer bereits die bekannten handelsüblichen Abroll-Leinen, so dass sie diese ohne zusätzlichen Mehraufwand direkt in die Aufnahme einsetzen können.

Wenn eine Abroll-Leine nach längerer Gebrauchsdauer schadhaft ist, kann diese einfach ausgewechselt und gegen eine neue ersetzt werden.

Gemäß einer bevorzugten Ausgestaltungsvariante der Erfindung kann es vorgesehen sein, dass der Rotor Stützflächen aufweist, an der die Gehäuse der Abroll-Leine anlegbar sind, und dass die Stützflächen äquidistant zu der Drehachse des Rotors angeordnet sind. An den Stützflächen werden die Abroll-Leinen definiert festgelegt. Dadurch, dass die Stützflächen äquidistant zur Drehachse des Rotors angeordnet sind, werden Querkräfte der beiden ziehenden Hunde minimiert. Dadurch wird die Handhabung deutlich verbessert.

Eine schnelle und einfache Festlegung der Abroll-Leinen ist insbesondere dann möglich, wenn der Rotor ein Spannteil aufweist, das einen Teil der Aufnahmen bildet, und das mittels einer Schiebeführung relativ zu wenigstens einem der Arretierstücke verstellbar ist. Auf diese Weise kann schnell und einfach eine Spannverbindung hergestellt werden. Eine zuverlässige formschlüssige Fixierung der Abroll-Leinen gelingt auf einfache Weise dann, wenn vorgesehen ist, dass das Spannteil eine Halteschale zur teilweisen Umfassung des Gehäuses der Abroll-Leine aufweist. Für den Rotor ergibt sich dann eine einfache Konstruktion, wenn vorgesehen ist, dass der Rotor einen Verbindungsabschnitt aufweist, der einen Flansch umfasst, wobei der Flansch an ein Koppelstück des Griffteils drehfest angekoppelt ist.

Erfindungsgemäß kann es vorgesehen sein, dass zumindest ein Teil der Arretierstücke einen Schiebesitz zur Einstellung verschiedener Arretierpositionen aufweist. Auf diese Weise kann eine Anpassung an unterschiedliche Abroll-Leinen individuell vorgenommen werden.

Die Bedienung der erfindungsgemäßen Vorrichtung kann dadurch weiter verbessert werden, dass das Griffteil einen Leinenauslöser aufweist, dass der Leinenauslöser zwei Betätigungsansätze aufweist, die jeweils einer Aufnahme zugeordnet sind, und dass der Leinenauslöser im oder am Griffteil zwischen einer Verriegelungsposition und einer Entriegelungsposition verstellbar ist. Auf diese Weise kann am Griffteil zentral eine Freigabe beziehungsweise eine Arretierung der beiden Leinen erfolgen. Dabei wirkt der Leinenauslöser auf die Auslöseknöpfe der beiden Abroll-Leinen ein.

Hierbei ist es insbesondere vorteilhaft, wenn vorgesehen ist, dass der Leinenauslöser im Griffteil an ein handbedienbares Betätigungsteil angekoppelt ist, und dass der Leinenauslöser mittels eines Federelementes federvorgespannt in der Entriegelungsposition gehalten ist. Dabei befindet sich, wie dies bei den gängigen Abroll-Leinen üblich ist, die Leine standardmäßig im Freilauf und kann aktiv durch Betätigung des Leinenauslösers gegen die Federvorspannung verriegelt werden.

Die Aufgabe der Erfindung wird auch dadurch gelöst, dass das Griffteil eine Stelleinheit aufnimmt, die ein an den Rotor angekoppeltes Drehstück aufweist, wobei das Drehstück mittels einer Betätigungseinheit wahlweise im oder entgegengesetzt dem Uhrzeigersinn dreh- oder schwenkbar ist, und dass die Betätigungseinheit mittels einer Handhabe zur Erzeugung der Dreh- oder Schwenkbewegung zwischen zwei Stellpositionen verstellbar ist. Bei einer Bedienung der Handhabe wird bei dieser Anordnung manuell ein Versatz der Betätigungseinheit bewirkt. Diese Stellbewegung wird in eine Drehbewegung umgesetzt, die dann am Drehstück auf den Rotor weiter gegeben werden kann. Ein Bediener kann damit, sobald er eine Verdrillung der Leinen feststellt, manuell einfach durch Betätigung der Handhabe eine Drehung des Rotors und damit eine Korrektur der Leinenposition herbeiführen.

Hierbei kann es insbesondere vorgesehen sein, dass das Drehstück an eine Welle angekoppelt ist, die zwei gegenläufige Gewinde aufweist, dass jedes Gewinde ein Innengewinde eines Übertragungsteils aufnimmt und dass die Übertragungsteile wechselweise abhängig von der gewünschten Drehrichtung mit der Betätigungseinheit koppelbar sind. Auf diese Weise wird mit einfacher Konstruktion und geringem baulichen Aufwand, die rechts-links-Verschwenkbarkeit des Rotors gelöst.

Dieser Übertragungsmechanismus ist zudem auch noch dann sicher funktionsfähig, wenn die beiden Hunde an den beiden Leinen ziehen.

Eine bevorzugte Erfindungsvariante ist derart, dass das Griffteil einen Drehrichtungs-Wahlschalter aufweist, der am Griffteil mittels einer Handhabe zwischen zwei den jeweiligen Drehrichtungen zugeordneten Schaltstellungen verstellbar ist. Auf diese Weise kann der Benutzer abhängig von der Verdrillrichtung eine Umstellung vornehmen und bequem vom Griffteil aus die Drehrichtung des Rotors einstellen.

Eine erfindungsgemäße Vorrichtung kann dadurch gekennzeichnet sein, dass die Betätigungseinheit mittels einer Spannfeder vorgespannt in einer Stellposition gehalten ist, dass die Betätigungseinheit aus dieser Stellposition unter Erzeugung der Dreh- oder Schwenkbewegung in die zweite Stellposition bewegbar ist, und dass die Betätigungseinheit mittels der Spannfeder aus der zweiten Stellposition in die erste bewegbar ist, wobei das Drehstück nicht gedreht wird. Auf diese Weise wird nach einer Betätigung des Rotors eine selbsttätige Rückstellung der Betätigungseinheit bewirkt, was zu einem verbesserten Bedienkomfort führt.

Die Erfindung wird im Folgenden anhand von einem in den Zeichnungen dargestellten Ausführungsbeispielen näher erläutert. Es zeigen:
- Fig. 1: in perspektivischer Darstellung eine Vorrichtung zur verdrehfreien Handhabung von zwei Leinen mit zwei Abroll-Leinen,
- Fig. 2: in perspektivischer Ansicht die Darstellung gemäß Fig. 1, jedoch ohne Abroll-Leinen,
- Fig. 3: eine perspektivische Innenansicht auf ein Griffteil der Vorrichtung gem. Fig. 2,
- Fig. 4: in perspektivischer Seitenansicht eine Stelleinheit,
- Fig. 5: die Stelleinheit gemäß Fig. 4 in perspektivischer Ansicht von unten, und
- Fig. 6: die Stelleinheit gemäß den Fig. 4 und 5 in Explosionsdarstellung.

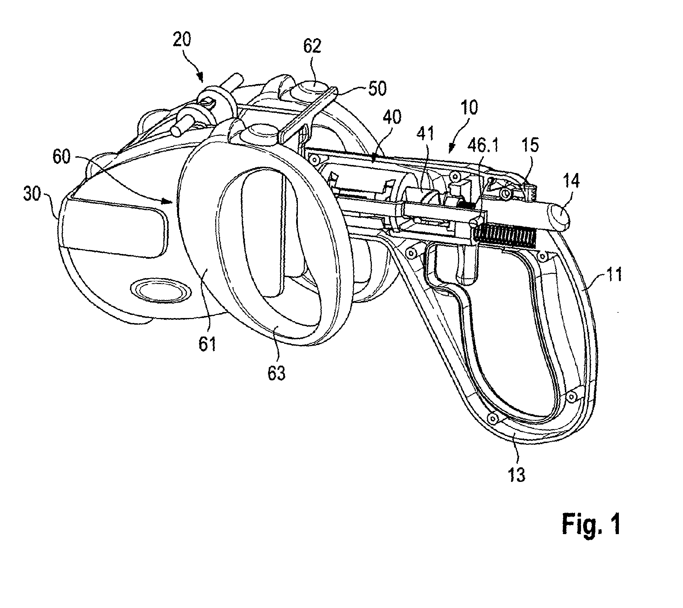

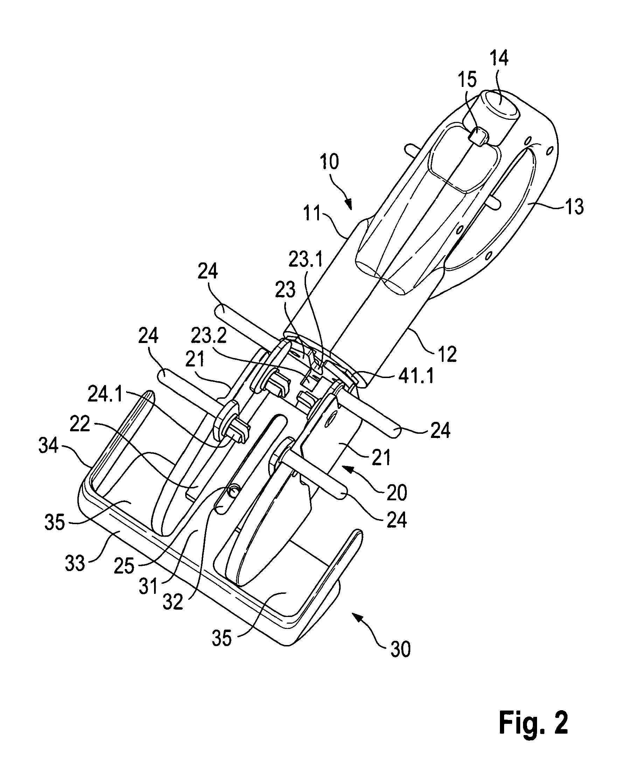

Wie die Fig. 1 und 2 zeigen, weist die Vorrichtung zur verdrillfreien Handhabung von zwei Leinen ein Griffteil 10 und einen daran verdrehbar angekoppelten Rotor 20 auf. Das Griffteil 10 umfasst zwei Gehäuseschalen 11, 12, die einen Griff 13 bilden. Im Gehäuse ist linear verstellbar ein Betätigungsteil 14 in Form eines Knopfes untergebracht. Das Betätigungsteil 14 kann mittels eines Sperrelementes 15 in der in das Gehäuse eingedrückten Stellung arretiert werden.

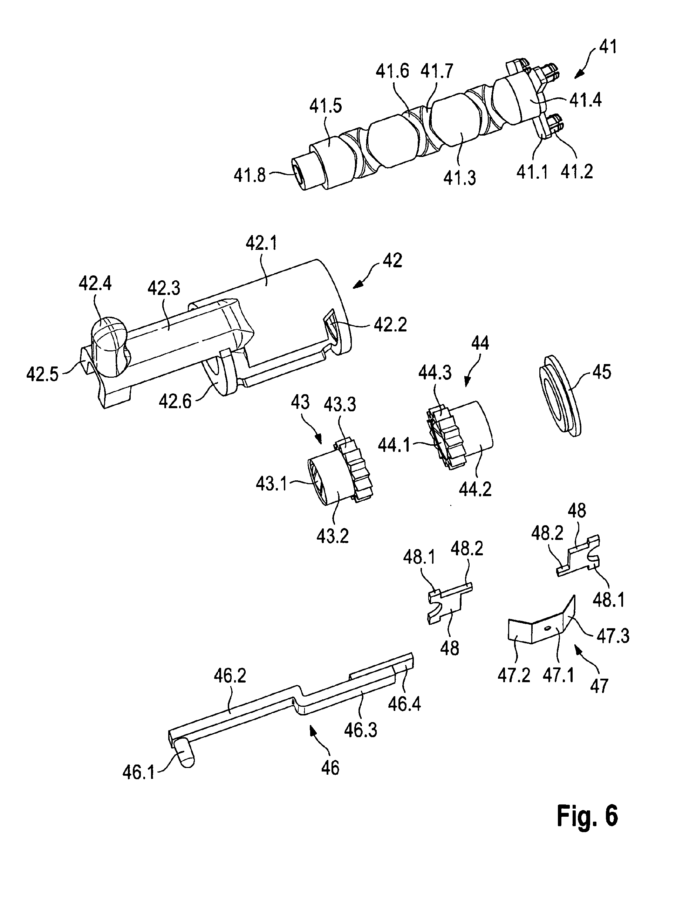

An einem Drehstück 41.1 des Griffteils 10 ist der Rotor 20 mit einem Flansch 23 befestigt. Hierzu weist das Drehteil 41.1 dübelartige Befestigungselemente 41.2 auf, die in Bohrungen des Flansches 23 eingerastet sind. An den Flansch 23 ist einteilig ein Verbindungsabschnitt 22 angeformt. In einer alternativen Ausgestaltungsvariante kann zur Verringerung des Teileaufwandes und aus Stabilitätsgründen der Verbindungsabschnitt 22 auch einteilig mit dem Drehstück 41.1 verbunden sein und zusammen mit einer später mit Bezug auf Fig. 6 näher beschriebenen Welle 41 eine Baueinheit bilden. Der Verbindungsabschnitt 22 ist dabei plattenförmig ausgebildet und trägt zwei zueinander parallel beabstandete Wandelemente, die außenseitige Stützflächen 21 bilden. An dem Verbindungsabschnitt 22 kann ein Spannteil 30 befestigt werden. Das Spannteil 30 weist einen plattenförmigen Ansatz 31 auf, in dem als Schiebeführung 32 ein Langloch eingearbeitet ist. Der Ansatz 31 ist auf den Verbindungsabschnitt 22 aufgelegt. Zur Fixierung des Spannteils 30 an dem Verbindungsabschnitt 22 ist eine Schraube (nicht dargestellt) verwendet, die durch die Schiebeführung 32 hindurchgeführt und in eine Gewindeaufnahme 25 des Verbindungsabschnittes 22 eingeschraubt ist. Im montierten Zustand klemmt die Befestigungsschraube den Ansatz 31 am Verbindungsabschnitt 22. Das Spannteil 30 ist auch in der Breite verstellbar, so ist gewährleistet, dass die Leinen fest umschlossen sind. Das Spannteil 30 trägt am Ansatz 31 eine Halteschale 33. Diese ist auf die Kontur des Gehäuses 61 der Abroll-Leine 60 angepasst ausgebildet, wie die die Fig. 1 deutlich zeigt. Als Abroll-Leinen 60 kommen handelsübliche Hundeleinen zum Einsatz, die in dem Gehäuse 61 eine aufgewickelte Hundeleine tragen, wobei die Hundeleine gegen die Vorspannung einer Feder aus dem Gehäuse 61 ausziehbar ist. Bei Entlasten der Hundeleine wird diese mittels der Feder wieder im Gehäuse 61 aufgewickelt. Die Abroll-Leine 60 umfasst ferner einen Sperrknopf 62. Befindet sich der Sperrknopf 62 in der in Fig. 1 gezeigten Grundstellung, ist die Hundeleine zum Ausziehen freigegeben. Wird der Sperrknopf 62 gedrückt, so wird die Abroll-Leine 60 gesperrt und die Hundeleine kann nicht weiter ausgezogen werden.

Der Rotor 20 umfasst zwei Aufnahmen 35, in die jeweils eine der handelsüblichen Abroll-Leinen eingesetzt werden kann. Zur Fixierung der Gehäuse 61 der Abroll-Leinen 60 sind Arretierstücke 24 verwendet. Die Arretierstücke 24 weisen einen bolzenförmigen Ansatz auf, der an einer Tragplatte festgemacht ist. Die Tragplatte ist mit einem Langloch versehen, durch das eine Befestigungsschraube 24.1 hindurchgeführt und in eine Gewindeaufnahme des Seitenteils 21 eingeschraubt ist. Auf diese Weise können die Arretierstücke 24 sowohl um die Mittellängsachse der Befestigungsschrauben 24.1 verschwenkt werden, als auch in Langlochrichtung axial verstellt werden. Auf diese Weise können die Arretierstücke 24 auf unterschiedliche Geometrien von Abroll-Leinen 60 angepasst werden. Zur Fixierung der Abroll-Leinen 60 werden die Arretierstücke 24 an das Gehäuse 61 angelegt und dann die Befestigungsschrauben 24.1 angespannt. Die zwei in Fig. 1 nicht erkennbaren Arretierstücke 24 greifen in den Bereich der Griffdurchführung 63 des Gehäuses 61 ein und sind dort an die Gehäusewand angelegt. Um ein seitliches Abrutschen der Abroll-Leinen 60 zu verhindern, sind an der Halteschale 33 einteilig Seitenteile 34 angeformt, die seitlich am Gehäuse 61 anliegen. Zur abschließenden oder zusätzlichen Fixierung wird noch ein Spanngummi so um die Gehäuse 61 der Abroll-Leinen 60 gespannt, dass diese unter Einwirkung der Bandspannung gegen die Seitenteile 21 gezogen und zuverlässig in Position gehalten werden.

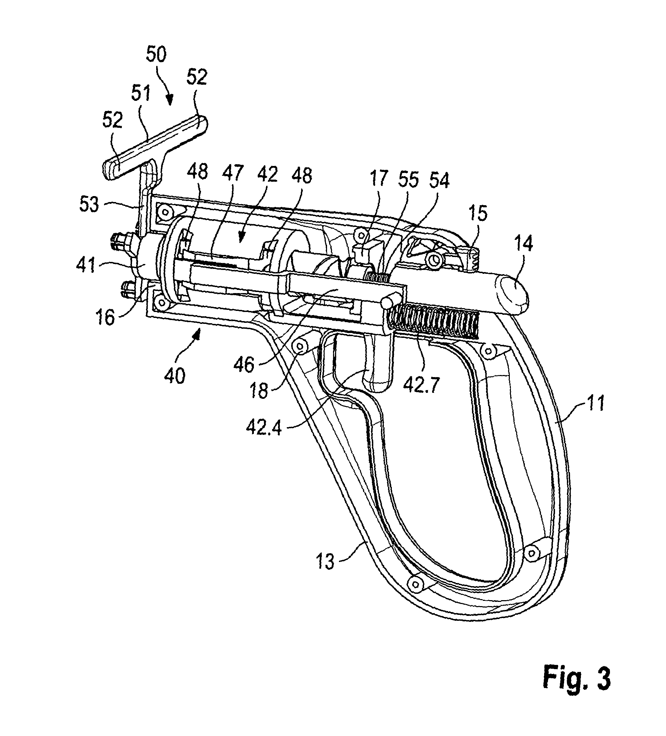

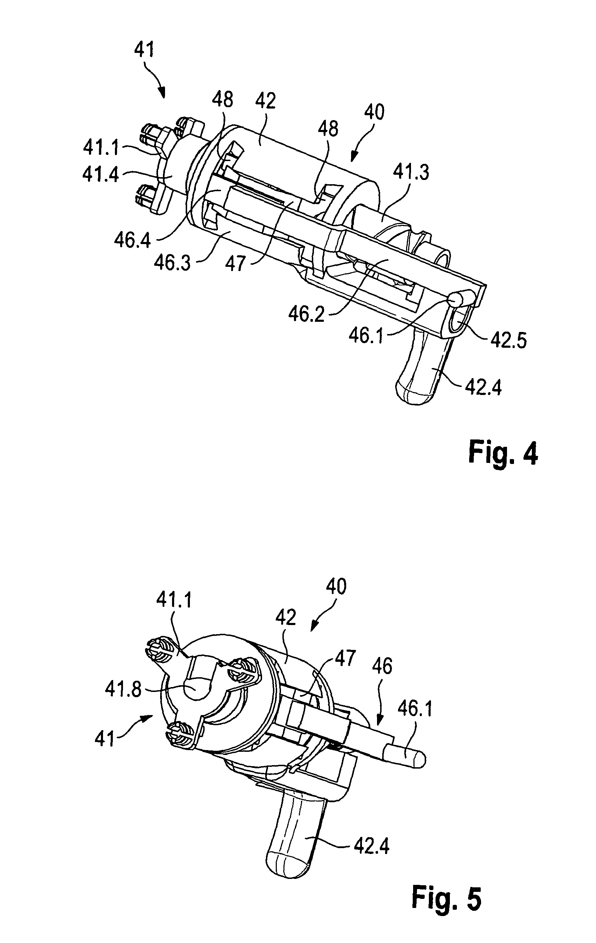

Fig. 3 zeigt das Griffteil 10 in geöffneter Darstellung, wobei die Griffschale 12 abgenommen ist. Wie diese Darstellung erkennen lässt, ist in das Griffteil 10 eine Stelleinheit 40 eingesetzt. Die Stelleinheit 40 ist in den Fig. 4 bis 6 näher detailliert, wobei in den Fig. 4 und 5 jeweils verschiedene Ansichten der zusammengesetzten Stelleinheit 40 gezeigt sind.

Nachstehend wird unter Bezugnahme auf Fig. 6 der Aufbau der Stelleinheit 40 näher erläutert. Wie diese Darstellung erkennen lässt, weist die Stelleinheit 40 eine Welle 41 auf, an die das Drehstück 41.1 einteilig angekoppelt ist. Wie diese Darstellung erkennen lässt, sind auch die Befestigungselemente 41.2 zur Anbindung des Rotors 20 einteilig an dem Drehstück 41.1 angeformt. Im Anschluss an das Drehstück 41.1 weist die Welle 41 ein Lager 41.4 in Form eines zylindrischen Bundes auf. Am gegenüber liegenden Wellenende ist ein weiteres Lager 41.5 in Form eines zylindrischen Bundes vorgesehen. Zwischen den beiden Lagern 41.4 und 41.5 bildet die Welle 41 eine zylindrische Führungsfläche 41.3. In diese Führungsfläche 41.3 sind zwei Gewinde 41.6 und 41.7 eingefurcht. Dabei ist ein Gewinde 41.6, 41.7 rechtsgängig, das andere Gewinde linksgängig ausgelegt. Die Welle 41 ist als Hohlwelle ausgebildet und weist dementsprechend eine Durchführung 41.8 auf.

Mit der Welle 41 kann eine Betätigungseinheit 42 gekoppelt werden. Die Betätigungseinheit 42 besitzt ein Gehäuse 42.1, das eine Aufnahme 42.2 umschließt. An das Gehäuse 42.1 ist über einen Ansatz 42.3 in Form eines Auslegers eine Handhabe 42.4 angeformt. Der Ansatz 42.3 bildet an der Handhabe 42.4 eine Federaufnahme 42.5. In das Gehäuse 42.1 können zwei Übertragungsteile 43 eingebaut werden. Die Übertragungsteile 43 weisen einen Zapfen 43.2 und ein daran einteilig angeformtes Zahnrad 43.3 auf. Das Zahnrad 43.3 weist dabei Zähne auf, die in Umfangsrichtung eine kontinuierlich ansteigende Auslenkschräge aufweisen, die in eine steile Sperrflanke übergehen. Dabei verläuft die steile Sperrflanke im Wesentlichen radial zur Mittellängsachse der Übertragungsteile 43. Die beiden Übertragungsteile 43 und 44 weisen jeweils ein Innengewinde 43.1, 44.1 auf. Dieses Innengewinde 43.1, 44.1 ist derart ausgebildet, dass es mit dem Gewinde 41.6 beziehungsweise 41.7 der Welle 41 zusammenarbeitet. Die beiden Übertragungsteile 43 und 44 werden in das Gehäuse 42.1 eingesetzt. Dabei liegend die Übertragungsteile 43, 44 mit ihren beiden Zahnrädern 43.3 und 44.3 aneinander. Die beiden Übertragungsteile 43 und 44 lassen sich durch eine bohrungsförmige Aufnahme 42.2 in das Gehäuse 42.1 leicht einsetzen. Um die beiden Übertragungsteile 43, 44 unverlierbar zu halten, ist eine Lagerscheibe 45 verwendet. Diese wird seitlich in das Gehäuse 42.1 so eingeschoben, dass es hinter der Aufnahme 42.2 den Zapfen 44.2 des zweiten Übertragungsteiles 44 drehgeführt abstützt. Die so gebildete Baugruppe kann auf die Welle 41 aufgeschoben werden. Dabei wird die Welle 41 beginnend mit ihrem Lager 41.5 durch die Aufnahme 42.2 (beziehungsweise die Lagerscheibe 45) hindurch geschoben. Dann kommen die Innengewinde 44.1 und 43.1 der beiden Übertragungsteile 43 und 44 in Eingriff mit dem jeweils für sie passenden Gewinde 41.6 und 41.7. Schließlich wird die Welle 41 mit ihrem Lager 41.5 durch eine Bohrung in einer Stützschulter 42.6 hindurch geschoben, bis sich der in den Fig. 4 und 5 gezeigte bauliche Zustand einstellt.

Der Drehrichtungs-Wahlschalter 46 befindet sich auf beiden Seiten des Gehäuses, damit er von Rechts- und Linkshändern bedient werden kann.

Anschließend werden in einen seitlichen Schlitz des Gehäuses 42.1 zwei Klauen 48 eingesetzt. Die Klauen 43 weisen eine Stützschulter 48.1 und dieser gegenüberliegend ein Sperrstück 48.2 auf. Die Klauen 48 werden so in das Gehäuse 42.1 eingesetzt, das die Sperrstücke in Eingriff mit den Verzahnungen der Zahnräder 43.3, 44,3 gelangen. Die Stützschulter 48.1 stützt sich innenseitig an der Stücksschulter 42.6 beziehungsweise innenseitig an der Lagerscheibe 45 ab. Zur Fixierung der beiden Klauen 48 ist ein Schaltstück 47 verwendet. Das Schaltstück 47 weist ein Basisteil 47.1 auf, von dem zwei plattenförmige Endstücke 47.2 abgewinkelt sind. Die plattenförmigen Endstücke 47.2 liegen außenseitig auf den Klauen 48 auf. Mit dem Schaltstück 47 ist ein Drehrichtungs-Wahlschalter 46 fest verbunden. Der Drehrichtungs-Wahlschalter 46 weist eine Handhabe 46.1 auf, an die ein Schenkel 46.2 angekoppelt ist. An dem Schenkel 46.2 schließt sich über eine Abkröpfung ein weiterer Schenkel 46.3 an. Der Handhabe 46.1 abgekehrt, weist der Drehrichtungs-Wahlschalter 46 ein Endstück 46.4 auf. Dieses Endstück 46.4 ist fest mit dem Basisteil 47.1 des Schaltstückes 47 verbunden. Die Zuordnung des Drehrichtungs-Wahlschalters 46 zu der Stelleinheit 40 beziehungsweise zu den Klauen 48 ist näher in den Fig. 4 und 5 entnehmbar. Der Drehrichtungs-Wahlschalter 46 kann in Längsrichtung seiner Schenkel 46.2, 46.3 linear verstellt werden. In einer ersten Schaltposition liegt das Endstück 47.2 auf der in Fig. 4 linksseitigen Klaue 48 auf und hält diese in Radialrichtung der Welle 41 unverschiebbar fest. Die zweite Klaue 48 hingegen ist von dem Endstück 47.3 des Schaltstücks 47 freigegeben. Es kann sich damit begrenzt in Radialrichtung der Welle 41 verstellen und wird bei einer Verdrehung der Welle an den Auslenkschrägen des Zahnrades 44.3 des Übertragungsteils 44 radial nach außen ausgelenkt, so dass sich das Übertragungsteil 44 im Freilauf drehen kann. In dieser Schaltstellung wird die zweite Klaue 48 blockiert, so dass sie das Übertragungsteil 43 sperrt. Insbesondere kann das Sperrstück 48.2 nicht an den Auslenkschrägen des Zahnrades 43.3 ausgelenkt werden. Wenn die Schaltstellung des Drehrichtungs-Wahlschalters geändert wird, so wird das Übertragungsteil 44 gesperrt und das Übertragungsteil 43 freigegeben. Bevor die in den Fig. 4 und 5 dargestellte Baugruppe in das Gehäuseteil 11 (gemäß Fig. 3) eingesetzt wird, wird noch ein Leinenauslöser 50 montiert. Dieser Leinenauslöser 50 weist einen barrenförmigen Träger 51 auf, der an seinen beiden Enden Betätigungsansätze 52 aufweist. Der Träger 51 ist über ein Übergangsstück 53 an eine Schieber 54 angekoppelt. Der Schieber 54 ist stangenartig ausgebildet und wird durch die Durchführung 41.8 der Welle 41 hindurch geschoben. Wie die Fig. 3 erkennen lässt, ist im Anschluss an die Welle 41 der Schieber 54 mit einer aufgeschobenen Spannfeder 55 bestückt. Die Spannfeder 55 wird auf dem Schieber 54 mittels eines geeigneten Befestigungselementes, beispielsweise eines Wellensicherungsringes, festgelegt. Der Schieber 54 ist mit seinem freien Ende in eine Aufnahme des Betätigungsteils 14 eingeschoben. Die Stelleinheit 40 kann, wie dies die Fig. 3 zeigt, in die Gehäuseschale 11 eingelegt werden. Anschließend wird die zweite Gehäuseschale 12 darüber gesetzt. Durch Schraubaufnahmen der zweiten Gehäuseschale 12 werden Befestigungsschrauben hindurchgeführt und in Schraubdome 18 der ersten Gehäuseschale 11 eingeschraubt. Damit ist das Griffteil 10 komplettiert.

Nachstehend wird unter Bezugnahme auf die Fig. 3 die Funktionsweise des Griffteils näher erläutert. Bei der Darstellung gemäß der Fig. 3 ist der Drehrichtungs-Wahlschalter 46 in seiner vorderen Stellposition gehalten. Dann blockiert er die in der Fig. 3 links dargestellte Klaue 48, während die rechtsseitige Klaue 48 freigegeben ist. Mit dieser Blockade wird das linke Übertragungsteil 43 drehfest mit der Betätigungseinheit 42 gekoppelt. Wenn nun die Betätigungseinheit 42 an der Handhabe 42.4 (pistolenartig) nach hinten gezogen wird, so wird diese Schiebebewegung in dem Übertragungsteil 43 auf die Welle 41 derart übertragen, dass diese in Drehbewegung versetzt wird. Das rechtsseitige Übertragungsteil 44 läuft passiv im Freilauf auf der Welle 41 mit. Die Gewindeverbindung zwischen den Gewinden 41.6 und 41.7 der Welle 41 und den Innengewinden 43.1 und 44.1 der Übertragungsteile 43 beziehungsweise 44 ist so gewählt, dass bei einer manuellen Betätigung der Handhabe 42.4 von ihrer ersten Stellposition in die zweite Stellposition eine 180°-gradige Drehung der Welle 41 bewirkt wird. Wenn die Handhabe 42.4 nach einer Betätigung entlastet wird, so schiebt eine Spannfeder 42.7, die in die Federaufnahme 42.5 des Gehäuses 42.1 eingreift und gegenüber dem Gehäuseteil 11 abgestützt ist, die Betätigungseinheit 42 wieder in die in Fig. 3 gezeigte Ausgangsstellung zurück. Wenn sich der Drehrichtungs-Wahlschalter 46 in der in Fig. 3 gezeigten Position befindet, so wird beim Anziehen der Handhabe 42.4 eine Drehung des Rotors 20 im Uhrzeigersinn bewirkt. Wenn nun der Drehrichtungs-Wahlschalter 46 in die andere Schaltstellung versetzt wird, so gelangt das Schaltstück 47 in einen Eingriff mit der rechtsseitigen Klaue 48 und blockiert dieses am Übertragungsteil 44. Das linksseitige Übertragungsteil 43 ist dann freigegeben. Wenn nun die Handhabe 42.4 in dieser Schaltstellung angezogen wird, so bewirkt das Übertragungsteil 44 über die entgegengesetzt drehende Gewindeverbindung eine Rotation des Drehstücks 41.1 entgegen dem Uhrzeigersinn.

Nachfolgend wird die Funktion des Leinenauslösers 50 näher beschrieben. Wenn das Betätigungsteil 14 gedrückt wird, so wird der Schieber 54 des Leinenauslösers 50 gegen die Vorspannung der Spannfeder 55 linear verschoben. Dabei drücken die beiden Betätigungsansätze 52 gleichzeitig auf die Sperrknöpfe 62 der Abroll-Leinen 60 (siehe Fig. 1). Mit einer Betätigung des Betätigungsteils 14 werden also beiden Leinen gleichzeitig gesperrt. Diese Sperrposition kann mit dem Sperrelement 15 temporär verriegelt werden. Wird das Sperrelement 15 entriegelt, dann stellen sich die Sperrknöpfe 62 und der Leinenauslöser 50 zurück und die Abroll-Leinen befinden sich wieder im Freilauf.

Im praktischen Einsatz wird an den beiden Leinen der Abroll-Leinen 60 jeweils ein Hund festgemacht. Wenn sich nun die Wege der beiden Hunde kreuzen, werden die Leinen verdrillt. Der Anwender erkennt nun, ob er zur Entdrillung der Leinen im oder entgegengesetzt dem Uhrzeigersinn verdrehen muss. Dementsprechend wählt er die Drehrichtung mit dem Drehrichtungs-Wahlschalter 46. Anschließend betätigt er die Handhabe 42.4, wobei die Betätigungseinheit 42 angezogen wird. Dadurch wird der Rotor 20 in die gewünschte Drehrichtung um 180° verdreht, so dass die Leinen wieder entdrillt sind.

## Patentansprüche

1. Vorrichtung zur verdrillfreien Handhabung von zwei Leinen, insbesondere Hundeleinen mit einem Griffteil (10), an das dreh- oder schwenkbar ein Rotor (20) angekoppelt ist, wobei der Rotor (20) die beiden Leinen aufnimmt, **dadurch gekennzeichnet,**
**dass** der Rotor (20) zwei Aufnahmen (35) aufweist, in die jeweils ein Gehäuse (61) eine die Leine aufnehmenden Abroll-Leine (60) einsetzbar ist, und
**dass** die Abroll-Leinen (60) mittels Arretierstücken (24) in den Aufnahmen (35) auswechselbar festlegbar sind.

2. Vorrichtung nach Anspruch 1,
**dadurch gekennzeichnet,**
**dass** der Rotor (20) Stützflächen (21) aufweist, an die die Gehäuse (61) der Abroll-Leine (60) anlegbar sind, und
**dass** die Stützflächen (21) äquidistant zu der Drehachse des Rotors (20) angeordnet sind.

3. Vorrichtung nach einem der Ansprüche 1 oder 2,
**dadurch gekennzeichnet,**
**dass** der Rotor (20) ein Spannteil (30) aufweist, das einen Teil der Aufnahmen (36) bildet, und das mittels einer Schiebeführung (32) relativ zu wenigstens einem der Arretierstücke (24) verstellbar ist.

4. Vorrichtung nach Anspruch 3,
**dadurch gekennzeichnet,**
**dass** das Spannteil (20) eine Halteschale (33) zur teilweisen Umfassung des Gehäuses (61) der Abroll-Leine (60) aufweist.

5. Vorrichtung nach einem der Ansprüche 1 bis 4,
**dadurch gekennzeichnet,**
**dass** der Rotor (20) einen Verbindungsabschnitt (22) aufweist, der einen Flansch (23) umfasst, wobei der Flansch (22) an ein Koppelstück (41.1) des Griffteils (10) drehfest angekoppelt ist.

6. Vorrichtung nach einem der Ansprüche 1 bis 5,
**dadurch gekennzeichnet,**
**dass** zumindest ein Teil der Arretierstücke (24) einen Schiebesitz zur Einstellung unterschiedlicher Arretierpositionen aufweist.

7. Vorrichtung nach einem der Ansprüche 1 bis 6,
**dadurch gekennzeichnet,**
**dass** das Griffteil (10) einen Leinenauslöser (50) aufweist,
**dass** der Leinenauslöser (50) zwei Betätigungsansätze (51) aufweist, die jeweils einer Aufnahme (35) zugeordnet sind, und
**dass** der Leinenauslöser (50) im oder am Griffteil (10) zwischen einer Verriegelungsposition und einer Entriegelungsposition verstellbar ist.

8. Vorrichtung nach Anspruch 7,
**dadurch gekennzeichnet,**
**dass** der Leinenauslöser (50) im Griffteil (10) an ein handbedienbares Betätigungsteil (14) angekoppelt ist, und
**dass** der Leinenauslöser (50) mittels eines Federelementes (55) federvorgespannt in der Entriegelungsposition gehalten ist.

9. Vorrichtung zur verdrillfreien Handhabung von zwei Leinen, insbesondere Hundeleinen mit einem Griffteil (10), an das dreh- oder schwenkbar ein Rotor (20) angekoppelt ist, wobei der Rotor (20) die beiden Leinen aufnimmt, **dadurch gekennzeichnet,**
**dass** das Griffteil (10) eine Stelleinheit (40) aufnimmt, die ein an den Rotor (20) angekoppeltes Drehstück (41.1) aufweist, wobei das Drehstück (41.1) mittels einer Betätigungseinheit (42) wahlweise im oder entgegengesetzt dem Uhrzeigersinn dreh- oder schwenkbar ist, und
**dass** die Betätigungseinheit (42) mittels einer Handhabe (42.4) zur Erzeugung der Dreh- oder Schwenkbewegung zwischen zwei Stellpositionen verstellbar ist.

10. Vorrichtung nach Anspruch 9,
**dadurch gekennzeichnet,**
**dass** das Drehstück (41.2) an eine Welle (41) angekoppelt ist, die zwei gegenläufige Gewinde (41.6, 41.7) aufweist,
**dass** jedes Gewinde (41.6, 41.7) ein Innengewinde (43.1) eines Übertragungsteils (43) aufnimmt und
**dass** die Übertragungsteile (43) wechselweise, abhängig von der gewünschten Drehrichtung mit der Betätigungseinheit (42) koppelbar sind.

11. Vorrichtung nach einem der Ansprüche 9 oder 10,
**dadurch gekennzeichnet,**
**dass** das Griffteil (10) einen Drehrichtungs-Wahlschalter (46) aufweist, der am Griffteil (10) mittels einer Handhabe (46.1) zwischen zwei den jeweiligen Drehrichtungen zugeordneten Schaltstellungen verstellbar ist.

12. Vorrichtung nach einem der Ansprüche 9 bis 11,
**dadurch gekennzeichnet,**
**dass** die Betätigungseinheit (42) mittels einer Spannfeder (42.7) vorgespannt in einer Stellposition gehalten ist,
**dass** die Betätigungseinheit (42) aus dieser Stellposition unter Erzeugung der Dreh- oder Schwenkbewegung in die zweite Stellposition bewegbar ist, und dass die Betätigungseinheit (42) mittels der Spannfeder (42.7) aus der zweiten Stellposition in die erste bewegbar ist, wobei das Drehstück (41.1) nicht gedreht wird.

13. Vorrichtung nach einem der Ansprüche 1 bis 8,
**gekennzeichnet durch** Merkmale der Vorrichtung nach einem der Ansprüche 9 bis 12.
